# EUROPEAN PATENT APPLICATION

(11) **EP 2 070 408 A1**
(43) Date of publication of application: **17.06.2009**
(21) Application number: 07023857.1
(22) Date of filing: 10.12.2007
(51) Int. Cl.: A01K 5/01, A01K 7/00

(54) **Portable animal feed and water dispenser**

(71) Applicant: WECHSLER, Lawrence I, Great Neck NY 11023 (US)
(72) Inventor: WECHSLER, Lawrence I, Great Neck NY 11023 (US)
(74) Representative: Thum, Bernhard

(57) **Abstract**

A feeding device used in conjunction with a feed containing reservoir (6) defines an open-trough structure (1) defining a pooling space in which contents from the reservoir (6) can be selectively transferred. The device is removably mountable to the bottle such that the device at least partially overlays a portion of the bottle at, and adjacent to, an opening thereof to effectively close the bottle opening and inhibit leakage during storage and transport. The opentrough structural portion (1) is preferably oriented to face the bottle (6) when mounted thereto, such that a more compact travel/storage envelope can be attained by an at least partial mutual nesting of device and bottle. Advantageously, a feed transfer portion is provided, conveniently including a restrictive orifice (9) provided within a region circumscribed by a second internally threaded portion (11), such that when the bottle (6) is threaded to the second threaded portion (11), contents from the bottle can be selectively transferred through the restrictive orifice in the nozzle portion directly into the pooling space located on the opposite side of the device from the second threaded portion.

## Description

### BACKGROUND OF THE INVENTION

The present invention relates to a portable device for selectively dispensing feed material to animals, and more particularly to a device which is useful for dispensing water, potable liquids, granulated solids and other flowable consumables from a reservoir into a pooling region for consumption thereof while being hand-held.

A wide variety of water dispensing devices are currently available on the market for providing portable means for watering a dog or other pet, for example, when away from home. However, the need still exists for a simple and effective product that can be carried in a state in which it is assembled to a bottled supply of water, and which could serve as a receptacle for holding and presenting, to an animal, water or other flowable feed transferred from the bottle, and which could be advantageously adapted to use with a wide variety of exiting bottle types.

It would therefore be desirable to provide a dispenser from which an animal could be fed water or flowable solids, and which would be advantageously adaptable to use with a wide range of differently sized reservoirs (for example, bottles of various shapes and sizes, including conventional bottles used to contain soda or water).

Accordingly, it is an object of the invention to provide a feed dispenser for animals which allows dispensing of water, potable liquids, granulated solids and other flowable consumables for consumption thereof, which overcomes the drawbacks of the prior art.

It is a further object of the invention to provide a dispenser capable of administering liquids for consumption, which is portable, and which is versatilely adapted to use with a wide range of bottle sizes and shapes.

It is a still further object of the invention to provide the dispenser in a form which is simple, compact, easy to operate and which may be produced economically.

### SUMMARY OF THE INVENTION

In accordance with these and other objects of the invention, there is provided a device which, when used in conjunction with a reservoir, conveniently provided, for example, in the form of a bottle, functions as an easily transportable dispenser for water and other flowable materials for consumption by a dog or other animal.

The device, a dispensing portion of which is advantageously of one-piece construction, includes an open-trough structure defining a pooling space in which contents from the bottle or other reservoir can be selectively transferred. A structural feature is provided allowing mountable engagement of the device to the bottle such that when mounted, the device at least partially overlays a portion of the bottle at, and adjacent to, an opening thereof. To this end, the device advantageously includes a cap portion having internal threads adapted to threadably engage corresponding threads provided on the bottle and, when threadably received thereto, effectively seals the bottle opening. The cap portion is advantageously provided in a position of the device such that the open-trough structural portion (concavity) thereof is oriented facing the bottle when mounted thereto, whereby a more compact travel/storage envelope can be attained by virtue of an at least partial mutual nesting of device and bottle. Advantageously, the device is dimensioned to overlay only a portion of a longitudinal extent of the bottle proximate the bottle opening, such that a portion of the bottle distant the bottle opening extends outwardly of the device. More advantageously, the device is configured such that when mounted to the reservoir, the boundary of the upper walls defining the opentrough structure present a profile arranged generally on a bias relative to a longitudinal bottle axis, whereby the device overlays a greater longitudinal extent of the bottle on one side thereof than the other.

In accordance with an advantageous embodiment, the device, described in general terms above, further includes a feed transfer portion adapted to engage the bottle in a second relative positioning from the first described position in which it is mounted and sealed for travel/storage. When so mounted in this second position, an opening of the bottle is directed to an interior of the open-trough of the device, such that transfer of an at least partial contents of the bottle to the pooling space can be effected, while attached, for presentation to an animal for consumption thereof by appropriate tilting, squeezing, etc. of the bottle.

In a particularly advantageous embodiment, the feed transfer portion includes a nozzle structure, conveniently formed simply in a form including a restrictive orifice provided within a region circumscribed by a second internally threaded portion which matches the threads of the bottle, which is provided on a side opposite the threaded cap portion, such that when the bottle is threaded to the second threaded portion, contents from the bottle can be selectively transferred through the restrictive orifice in the nozzle, in a controlled manner, for example by squeezing the bottle, directly into the pooling space located on the opposite side of the device from the second threaded portion.

The above, and other objects, features and advantages of the present invention will become apparent from the following description read in conjunction with the accompanying drawings.

### BRIEF DESCRIPTION OF THE DRAWINGS

- Fig. 1: is a perspective view from a direction of the top of a feeding device, when in use, in accordance with an embodiment of the invention;
- Fig. 2: is another perspective view of the device according to the embodiment shown in Fig. 1 from a direction of a forward end the open trough formed by the feeding device, when in use;
- Fig. 3: is side elevational view shown in partial cross-section depicting the embodiment of Figs. 1 and 2 assembled to an upright bottle in a first position corresponding to a travel/storage orientation;
- Fig. 4: is side elevational view shown in partial cross-section depicting the embodiment of Figs. 1-3 re-assembled to the bottle in a second position corresponding to an active feeding orientation; and
- Fig. 5: is a side elevational view shown in partial cross-section depicting a simplified alternative embodiment in accordance with the invention.

### DETAILED DESCRIPTION OF THE PREFERRED EMBODIMENT

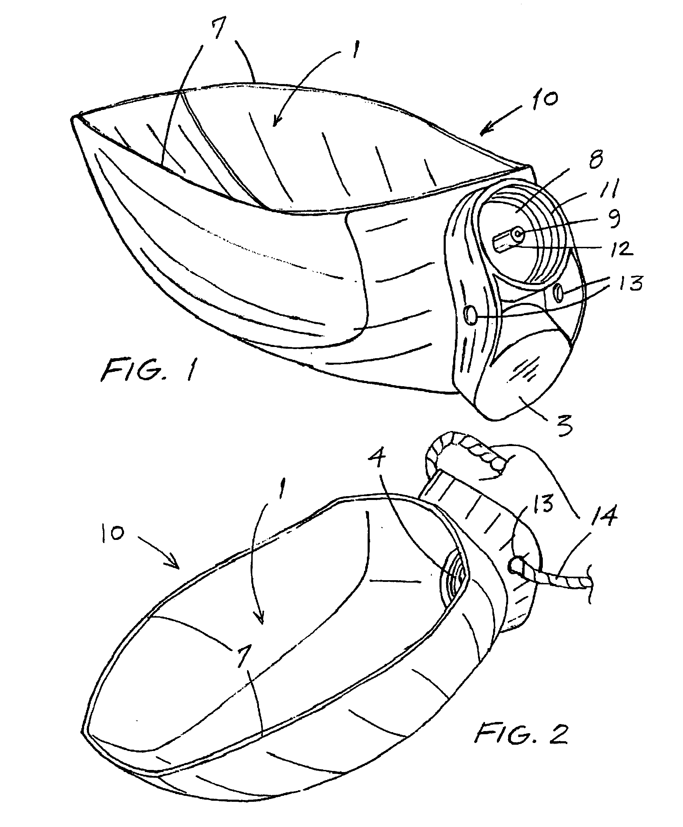

Referring now to the figures, a feeding device is shown, generally at numeral 10. It is to be understood that feeding device 10 of the present example incorporates many optional features not necessarily incorporated in all versions of feeder embodiments made in practice, in accordance with the invention, as contemplated in its broadest sense. Therefore, in connection with the following description of the depicted embodiment of Figs. 1-4, when a feature is indicated as being advantageously, conveniently, preferably or optionally provided (or other words to that effect), it is to be understood that such feature or features, while desirable, need not be included as essential to practice of the invention as contemplated.

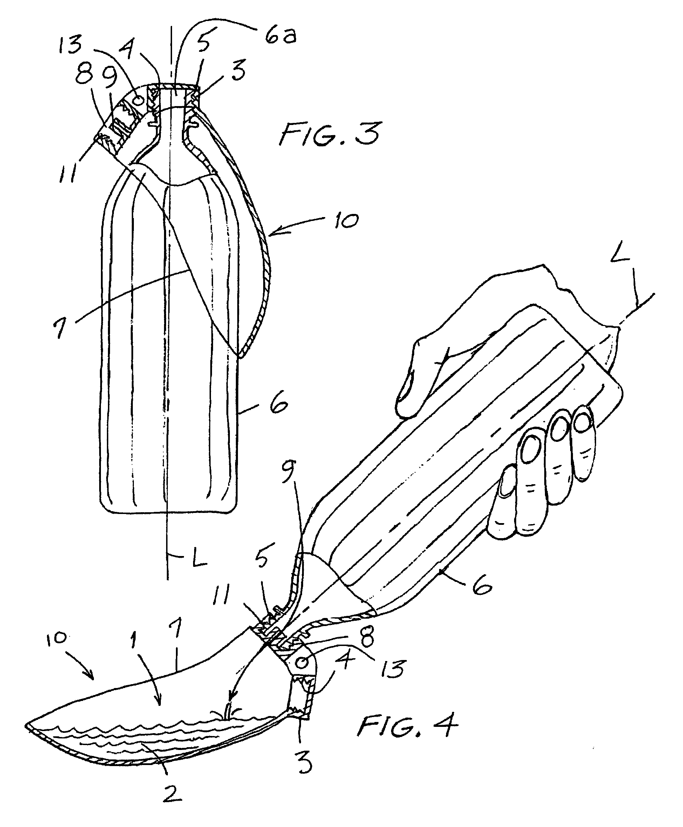

In the preferred example depicted in Figs. 1-4, device 10 includes a structure providing an open-trough structure 1 defining a pooling space in which flowable material from a reservoir, conveniently in the form of a bottle 6, transferred thereto (such as water 2), can be consumed by an animal (see Fig. 4). Device 10 includes structure for permitting detachable mounting of device 10 to bottle 6. In the depicted example, this is advantageously provided in the form of a cap portion 3 having internal threads 4 adapted to threadably engage corresponding threads 5 provided on the bottle 6.

As shown in the figures, device 10, which provides the feeding function when attached to the bottle 6, is advantageously of one-piece construction, for ease of manufacture and foolproof reliability. When mounted to the bottle 6, device 10 at least partially overlays a portion of the bottle 6 at, and adjacent to, an opening 6a thereof. When screwed onto bottle 25 6, cap potion 3 effectively seals bottle opening 6a. As shown, cap portion 3 is advantageously located in a position of device 10 such that the open-trough structural portion (concavity) 1 thereof is oriented facing bottle 6 when mounted thereto, such that a maximized compact travel/storage envelope can be attained by an at least partial mutual nesting of device 10 and bottle 6. Advantageously, device 10 is dimensioned to overlay only a portion of a longitudinal extent of bottle 6 proximate bottle opening 6a, and such that a portion of bottle 6 distant the bottle opening 6a extends outwardly (i.e., downwardly, when bottle 6 is upright) of the device 10.

Optionally, and advantageously, device 10 further includes a feed transfer portion 8 adapted to engage the bottle 6 in a second relative positioning from the first described position wherein the bottle 6 is mounted to device 10 via the cap portion 3 for travel/storage and sealed, such that when so mounted in this second position (Fig. 4, shown in a feed- active state), the bottle 6 and device 10 collectively form a fully attached feeder in which an opening of the bottle 6 is directed to an interior of the open-trough 1 of device 10, allowing transfer of an at least partial contents of the bottle 6 to the pooling space to be effected for presentation to an animal for consumption thereof by appropriate tilting, squeezing, etc., of the bottle 6. In the preferred example depicted, the feed transfer portion 8 advantageously includes a nozzle structure, conveniently formed simply in a form including a restrictive orifice 9, provided within a region circumscribed by a second internally threaded portion 11, which matches the threads 4 of bottle 6, oriented to face in a direction of a side opposite the threaded cap portion 3. When bottle 6 is threaded to the second threaded portion 11, contents from the bottle 6 can be selectively transferred through the restrictive orifice 9 in the nozzle portion, in a controlled manner, for example by squeezing the bottle 6, directly into the pooling space of the open-trough 1, located on the opposite side of the device 6 from the second threaded portion 11. Orifice 9 is advantageously provided as a tube 12, since the greater axial distance of the orifice restricts uncontrolled flow by creating an increase in capillary resistance over that present simply by forming a hole in the ordinarily-existing area wall thickness.

Advantageously, particularly in connection with the option allowing remounting in the second position for feeding, device 10 is configured such that when mounted to the reservoir (bottle 6) in the closed position of Fig. 3, the boundary 7 of the upper walls defining the open-trough structure 1 present a profile arranged on a bias relative to a longitudinal bottle axis L, whereby the device 10 overlays a greater longitudinal extent of the bottle on one side thereof than the other. By virtue of such structure, when reoriented to the active feeding position shown in Fig. 4 (i.e., the second mounted position), a comfortable feeding angle for the animal (i.e., an obtuse angle less than 180°) can be maintained between the bottle axis L and the device 10, while the boundary 7 is maintained at a generally level orientation to prevent loss of water 2 pooled therein. It is noted that the pooling space in the open-trough 1 is advantageously configured to receive a desired volume of water 2 (or other feed) without spillage over the edges of the device 10, for example by sufficient curvature (as in Fig. 4) or other measures, such as, for example, forming the device in a flattened box-shape, etc.

Referring to Fig. 3, it will be understood that since the bottle 6 extends from the device 10 (downwardly extending when the bottle 6 is upright, as shown), and dismounting is accomplished simply by unscrewing the bottle 6 from the device 10, the device 10 can accommodate various bottles of any shape, size and length, limited only by a maximum bottle diameter which contacts any part of the boundary 7 when screwed into device 10 to the closed (travel-oriented mounted state) position of Fig. 3 (the bottle 6 shown therein illustrating such maximum permissible diameter). It is therefore contemplated that commercially, the device 10 alone could be offered for sale, and the device 10 being configured with appropriate size threading to allow the device 10 to be used with commercially bottled water or recycled soda and beverage bottles in a range of sizes up to a maximum size for which the device 10 is designed.

To facilitate transport of the device 10 and bottle 6 combination when filled with water, a hang cord or strap 14 is optionally provided, received through holes 13. Another hole or holes can of course be provided alternatively on other locations for providing the same hanging function by the hang cord or strap 14or other suitable means, for example, a belt or toggle clip, etc. (not shown).

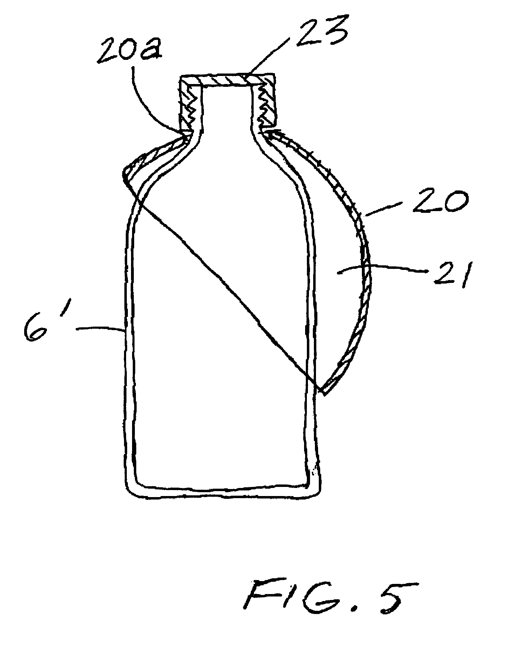

As noted above, while this embodiment represents a preferred example, much simpler embodiments are contemplated within the scope of the invention. For example, Fig. 5 depicts a device 20 which is maintained to a bottle 6' by a cap portion 23 provided as a cap part separate from device 20, instead of being integral therewith, as in the previous embodiment. In the present embodiment, the device 20 includes an open trough form providing a pooling space 21, and has an appropriately positioned hole 20a through which the neck of bottle 6' extends when in the storage position of Fig. 5. Cap portion 23 threads onto the bottle 6', and prevents separation of the device 20 from the bottle 6'. For use, the cap portion 23 is removed, and the device 20 can then be separated from the bottle 6'. The user simply cups the device 20 in a hand and pours water into it from the bottle 6' for consumption by the pet.

Optionally, while not illustrated, a handle can be formed on the device 20, and the device 20 then held by such handle during a feeding operation. After use, the device 20 is returned to the bottle 6' and the cap 23 screwed onto the bottle 6' to secure the device to the bottle 6' for travel/storage.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention.

## Claims

1. A feeding device, comprising:
an open-trough structural portion defining a pooling space to which flowable consumables are transferrable for consumption by an animal; and
a cap portion removably mountable to a reservoir having an opening and within which said flowable consumables are containable, the cap portion at least partially sealing against flow of the consumables through the opening and maintaining a travel-oriented mounted state of the open-trough structural portion to the reservoir when the cap portion is mounted to the reservoir.

2. A feeding device according to claim 1, wherein said cap portion is integral with said open-trough structural portion.

3. A feeding device according to claim 1, wherein said opentrough structural portion at least partially overlays a portion of the reservoir adjacent to the opening thereof when in said travel-oriented mounted state.

4. A feeding device according to claim 1, wherein said cap portion includes threads engageable with threads on said reservoir at said opening.

5. A feeding device according to claim 1, wherein said pooling space generally faces a vertical extent of the reservoir when in said traveloriented mounted state.

6. A feeding device according to claim 1, further comprising a feed transfer portion carried on said open-trough structural portion which is engageable with the reservoir so as to maintain the device in a feed-active state in which a relative positioning of the reservoir and the open-trough structural portion is different from another relative positioning when in the travel-oriented mounted state, said opening of said reservoir being communicative with said pooling space of said open-trough structural portion when in said feed-active state.

7. A feeding device according to claim 5, wherein said feed transfer portion includes a nozzle structure allowing controlled dispensing of consumables from the reservoir therethrough when in said feed-active state.

8. A feeding device according to claim 1, wherein a boundary of upper walls defining the open-trough structural portion presents a profile arranged on a bias relative to a longitudinal reservoir axis, whereby the device overlays a greater longitudinal extent of the reservoir on one side of the reservoir than on another side thereof when in said travel-oriented mounted state.

9. A feeding device according to claim 6, wherein a longitudinal axis of said open-trough structural portion is arranged at an obtuse angle less that 180° to the longitudinal reservoir axis when in said feed-active state.

10. A feeding device, comprising:
a reservoir having an opening;
an open-trough structural portion defining a pooling space in which flowable consumables held in said reservoir can be transferred from said opening of said reservoir for consumption by an animal; and
a cap portion removably mountable to said reservoir, such that when mounted, the cap portion at least partially seals against flow through the opening and maintains a travel-oriented mounted state of the open-trough structural portion to the reservoir.

11. A feeding device according to claim 10, wherein said opentrough structural portion is dimensioned to overlay only a portion of a longitudinal extent of said reservoir when in said travel-oriented mounted state such that a longitudinal portion of said reservoir extends outward of said open-trough structural portion, thereby permitting accommodation of said reservoir having any length in said mounted state.

12. A method of feeding an animal, comprising:
providing an open-trough structural portion defining a pooling space in which flowable consumables contained in a reservoir are transferrable for consumption by the animal;
at least partially sealing an opening in the reservoir by attachment of a cap portion thereto in a first orientation relative to the reservoir which concomitantly retains the open-trough structural portion to the reservoir;
reorienting the open-trough structural portion from said first orientation such that the opening of the reservoir is no longer sealed; and
transferring contents of said reservoir into the pooling space of opentrough structural portion via said opening.

13. A method according to claim 12, wherein said reorienting includes removably mounting said reservoir to said open-trough structural portion in a second orientation relative to said open-trough structural portion, said opening of said reservoir being communicative with said pooling space of said open-trough structural portion when in said second orientation, said method further comprising transferring said contents of said reservoir into said pooling space when in said second orientation.

14. A method according to claim 12, wherein said cap portion is integral with said open-trough structural portion.

15. A method according to claim 13, wherein said transferring of said contents of said reservoir into said pooling space includes restricting a flow of said contents.

16. A method according to claim 13, wherein said removably mounting includes arranging a longitudinal axis of said open-trough structural portion at an obtuse angle less that 180° to the longitudinal reservoir axis when in said second orientation.

17. A method according to claim 13, wherein said cap portion is integral with said open-trough structural portion.

18. A method according to claim 17, further comprising matching threads carried on said cap portion with existing threads of a commercially available beverage bottle.

19. A method according to claim 18, further comprising dimensioning said open-trough structural portion to overlay only a portion of a longitudinal extent of said commercially available beverage bottle such that a longitudinal portion of said bottle extends outward of said open-trough structural portion when in said first orientation, thereby permitting accommodation of said bottle having any length in said first orientation.
